# EUROPEAN PATENT SPECIFICATION

(11) **EP 4 214 428 B1**
(45) Date of publication and mention of the grant of the patent: **06.03.2024**
(21) Application number: 21754954.2
(22) Date of filing: 30.07.2021
(51) Int. Cl.: F04B 49/24, F16H 61/4026, F16H 61/4043

(54) **HYDRAULIC VALVE BLOCK AND HYDRAULIC UNIT FOR CLOSED CIRCUIT APPLICATIONS**
HYDRAULIKVENTILBLOCK UND HYDRAULIKEINHEIT FÜR GESCHLOSSENE KREISLAUFANWENDUNGEN
BLOC DE SOUPAPE HYDRAULIQUE ET UNITÉ HYDRAULIQUE POUR APPLICATIONS EN CIRCUIT FERMÉ

(30) Priority: 14.10.2020 DE 102020212985
(43) Date of publication of application: 26.07.2023
(73) Proprietor: Danfoss Power Solutions GmbH & Co. OHG, 24539 Neumünster (DE)
(72) Inventor: DABELSTEIN, Lena, 6430 Nordborg (DK)
(74) Representative: Kuhnen & Wacker Patent- und Rechtsanwaltsbüro PartG mbB
(86) International application number: PCT/EP2021/071476
(87) International publication number: WO 2022/078646

(56) References cited:
- EP-A1- 2 975 304
- US-A1- 2012 260 641
- US-A1- 2018 291 797
- US-B1- 6 305 486
- US-B1- 6 508 328

## Description

The present invention is directed to a hydraulic valve system for hydraulic units, and in particular for hydraulic units used in closed circuit hydraulic applications.

In closed circuit hydraulic applications there are often a minimum low pressure which needs to be maintained while the hydraulic unit is operating. Maintaining a minimum low pressure becomes problematic when shock loads occur resulting in a steep pressure rise rate at the high-pressure side of the closed hydraulic circuit. Such shock loads occur, for instance, if a hydrostatic propel unit in operation is abruptly charged with high level load, for instance encountering a high resistance or partial obstruction. A practical example would be a hydraulic-driven drilling operation when the drill gets stuck in the ground.

When such a shock load occurs a steep pressure rise rate at the high-pressure side of the hydrostatic propel unit occurs, leading to a high charge of the hydrostatic lines, seals and other parts of the hydrostatic system. On the low-pressure side the pressure drops due to the high hydraulic fluid flow demand required to work against the shock load. These pressures drops can be extremely high and the charge pump usually cannot compensate for the flow that is required at the high-pressure side, therefore when a shock load occurs it can cause damage to the hydrostatic system. Such an event resulting in a steep pressure rise at the high-pressure side and a steep pressure drop at the low-pressure side is commonly known as a 'low loop event'. In order to prevent damage to a hydrostatic unit when such a low loop events occurs it is desirable to maintain/ensure a minimum low pressure level at the low-pressure side.

Publication DE 10 2018 205 194 A1 (US 2018/0291797 A1) describes a hydraulic circuit in which the high pressure side and the low pressure side can be circumvented by a bypass valve when the low pressure at the low pressure side drops below a pre-determined minimum pressure, i.e. the pre-determined and to be maintained minimum pressure. However, when a high velocity low pressure drop occurs the system may not react fast enough as the bypass valve is held in its closed position by the low pressure, and only opens when the low pressure hydraulic force acting on the bypass valve spool is lower than a spring force acting in the bypass opening direction.

EP 2 975 304 A1 describes a method for braking a hydrostatic drive, which has a pump driven by an internal combustion engine, with an adjustable displacement volume, and a hydraulic motor connected to the hydraulic pump via two lines in a closed circuit. The hydrostatic drive also has a hydraulic valve block for connecting the high-pressure side to the low-pressure side, which includes a bypass valve that is designed as an electrically controllable proportional valve.

A person skilled in the art could deduce that when the low pressure level is slightly below the pre-determined minimum pressure level the surplus of the spring force to open the bypass valve is very small, so small such that it may be insufficient to open the bypass completely as the spring force reduces when the spring decompresses, so a balance of spring force and hydraulic force can occur before the bypass valve is at its fully open position. Also the reaction velocity to move the bypass valve spool from the closed position to the open position is slow, as it depends on the delta force between the spring force and low-pressure force which is at a level below the pre-determined minimum pressure level in case the bypass valve is to be opened to avoid a low loop event.

Hence, it is an objective of the present invention to provide a hydraulic system in which a minimum low pressure is ensured, and maintained, during operation of a hydraulic unit, wherein the reaction time of the hydraulic system should be short, and the reaction speed of the hydraulic system should be high in order to avoid a low loop event. At the same time the hydraulic system should be cost-effective, and robust in its design.

The objective is solved by a hydraulic valve block according to claim 1, wherein preferred embodiments of the hydraulic valve block according to the invention are given with subclaims directly or indirectly depending on claim 1. The objective is also solved by a hydraulic unit according to claim 10 or a hydraulic system according to claim 11, both using a hydraulic valve block according to the invention.

The hydraulic valve block according to claim 1 is provided for a hydraulic unit, which can be used in a closed hydraulic circuit application. The hydraulic valve block according to the invention comprises a high-pressure port, a low-pressure port, a pilot valve with a pilot valve spool and a bypass valve having a bypass valve spool. Thereby, the pilot valve can be in connection with an inlet to the high-pressure port of the hydraulic valve block and with a discharge port to a discharge area. An outlet of the pilot valve is connected to a control line leading to the bypass valve. The pilot valve spool is held in an initial position, in which the outlet is connected to the discharge area by means of a pilot valve spring acting on its first front face. The pilot valve spool can be moved according to the invention into a shifted position by means of a hydraulic force whose relative strength depends on the pressure level at the low pressure port of the hydraulic valve block. In the shifted position of the pilot valve pressure from the high-pressure port via the inlet can be conducted to the control line. Here, the relative strength of the force for shifting the pilot valve spool depends on the low pressure level, and acts on the second front face of the pilot valve spool and also against the force of the pilot valve spring, pushing the pilot valve spool towards the initial position.

The bypass valve spool of the bypass valve according to the invention comprises a first opening front face connected to the high-pressure side of the hydraulic valve block, and a closing front face to which the control line is connected to. On the closing front face a bypass valve spring is acting also in closing direction of the bypass valve spool. The bypass valve according to the invention can be switched from a closed position in which a fluid connection between the high pressure port and the low pressure port is disabled, to an open position in which a fluid connection is enabled between the high pressure port and the low-pressure port. If an opening force exerted by the high pressure on the opening front face, of the bypass valve spool is higher than the sum of closing forces on the closing front face the bypass valve spool is shifted to the open position. Therefore, the sum of closing forces is a combination of the pressure in the control line acting on the closing front face and the force exerted by the bypass valve spring. Hence when the hydraulic system (in which the hydraulic valve block is used) has no (or is devoid of any) pressure / is pressure-less the bypass valve is held in the closed position only by the bypass valve spring, because no pressure forces are present at the bypass valve spool. The same scenario does apply for a hydraulic valve block which is not connected to a hydraulic unit.

In normal operational conditions, i.e. when the low pressure level is higher than a pre-determined minimum pressure level, the pilot valve spool is held in its shifted position as the pressure force acting upon is higher than the pilot valve spring force. In the shifted position, the pilot valve guides pressure from the high-pressure port to the control line via the inlet, which further guides the pressure to the closing surface of the bypass valve spool. Hence, as the hydraulic valve block and hydraulic unit according to the invention is under normal operational conditions high pressure is conducted to the first opening surface of the bypass valve spool as well as to the closing surface. However, on this closing surface a bypass valve spring also acts applying an additional force so that the bypass valve is held securely in the closed position and no connection between the high pressure side and the low pressure side is enabled because no pressure difference acts on the bypass valve spool, even though the pressure surfaces at the closing and opening side are of an equal size.

In case the pressure at the low pressure side, at the low pressure port of the hydraulic valve block drops below a pre-determined threshold value for a minimum pressure level, the pilot valve spool is shifted back to its initial position by the pilot valve spring which exerts a force on the pilot valve spool that is higher than the hydraulic force on the opposite pilot valve spool side, which is dependent on the low pressure level. When the hydraulic pressure at the low-pressure side is below the threshold value for the minimum pressure level the pilot valve spring force is the higher force. In this initial position, i.e. in a lower than permitted minimum low-pressure condition the control line is fluidly connected via the pilot valve spool to an area of lower relative pressure for example, connected to a reservoir in a casing of the hydraulic unit, or to a tank. In other words, the sum of forces at the closing front face of the bypass valve spool is lower than the opening force created by the high pressure on the opening front face of the bypass valve spool such that the bypass valve spool is shifted to its open position in which a bypass between the high pressure port and the low pressure port of the hydraulic valve block is enabled, according to the invention.

At least a person with skills in the relevant art could derive from the above that the bypass valve, according to the invention, is always switched by means of hydraulic pressure coming from the high pressure side, such that small undercuts of the low pressure under the permitted minimum low pressure level are detected quickly and the hydraulic valve block, according to the invention, can react rapidly as the moving forces exerted on the bypass valve spool are big, due to the high pressure generating these switching forces in any operational case.

It can be also derived from the above that the control line conducting a control pressure to the closing surface of the bypass valve spool can be drained to a low pressure area, such that a hydraulic counterforce acting against the bypass valve opening force can be reduced to a minimum within short time, such that a force difference between opening and closing forces at the two front faces of the bypass valve spool is high in each case, so that quick and rapid reaction for moving the bypass valve spool is possible. In this instance, and in a preferred embodiment the closing front face on which the closing hydraulic pressure can act on, via the control line, is bigger than the opening pressure surface on the bypass valve spool in order to enhance the closing forces acting on the bypass valve spool. Therefore, in case the pressure at the low pressure port is above the minimum low pressure level the hydraulic force powered by the high pressure acting on the closing surface of the bypass valve spool is even higher when the closing pressure surface (closing front face) is bigger than the opening pressure surface for opening the bypass valve.

In another embodiment according to the invention, a second opening pressure surface is arranged at the opening side of the bypass valve spool and is in fluid connection with the low-pressure side. In this case, the closing pressure front face on the bypass valve spool should be bigger than the opening high pressure front face on the opposite side of the bypass valve spool, in order to compensate the additional hydraulic force which is generated on the second opening front face by the low pressure. In one concrete embodiment, if two opening pressure front faces are located at the bypass valve spool, these two opening front faces can be of equal size. Such an embodiment is applicable for closed circuit applications in which the hydraulic unit, to which the hydraulic valve block according to the invention is connected to can be operated in motor mode, as well as in pump mode. As it is known at least by a person with skills in the relevant art, the high pressure side and the low pressure side will change with the change of the operational mode of a hydraulic unit, e.g., from motor mode to pump mode.

If the hydraulic block according to the invention is used for such a hydraulic unit, a further selective switching valve is arranged upstream the pilot valve. Such a selective switching valve ensures in every mode that high pressure is guided to the inlet of the pilot valve and low pressure is guided to the second front face of the pilot valve spool so the low pressure can act as a shifting force against the pilot valve spring. Such a selective switching valve can be a two-position-four-way-valve, wherein each front face of such a selective switching valve is referenced to one inlet. Such switching valves are known to a person skilled in the art so no further explanations are necessary.

When using a switching valve in the hydraulic valve block according to the invention the hydraulic valve block is usable also for hydraulic units. E.g. in hydraulic propel applications which can be driven in two directions which also necessitates a change of pressure sides. With using a switching valve, the hydraulic valve block according to the invention increases functionality and the range of uses to a multitude of hydrostatic applications. In case both closing front faces at the bypass valve spool on which the two pressure levels can act simultaneously are of equal size, the functionality of the hydraulic valve block according to the invention for all operational conditions is enabled, and a quick reaction and a quick actuation time can be maintained independently from the operational condition.

Even though as explained above, the switching force for the pilot valve spool is preferably exerted directly by the low pressure, it can also be imagined, at least by a person with skills in the relevant art, that this force is created otherwise in dependency on the low pressure level present at the low pressure port. For Instance, the pilot valve spool can be actuated by a solenoid using the signal from a pressure sensor arranged at the low pressure side. Another possibility would be a kind of leverage mechanism or spring mechanism, whose translated force is directly related to the low-pressure level. However, in one preferred embodiment of the invention the shifting force acting on the pilot valve spool is generated directly by guiding low pressure on the switching front face of the pilot valve spool.

In a further embodiment, the pilot valve is a proportional valve, whose positioning is dependent on the low pressure level at the low pressure port and is moveable such that high pressure from the high pressure port is guided in a proportional manner towards the bypass valve via the control line. In this embodiment, the reaction time is maintained. However, the switching velocity of the pilot valve is slightly reduced in order to prevent pressure overshooting at the low pressure side when opening the bypass valve, in order to enable the bypass between the high pressure port and the low pressure port.

In another preferred embodiment, the force of the pilot valve spring is adjustable. By doing this, the minimum low-pressure level with which the hydraulic unit and/or the hydraulic system should operate can be adjusted. By adjusting the spring force the low pressure necessary to shift the pilot valve spool can be set and therewith the minimum threshold value for the low-pressure level. Usually, such an adjustment is done when a hydraulic system is placed into service. However, a readjustment at a later point of time is imaginable, too.

Further, the spring of the bypass valve can be configured such that its force is adjustable, too, in order to ensure the position of the bypass valve spool in its closed position, when the low pressure is above the minimum admissible pressure level. However, the bypass valve spring force should not be so high that it slows down the opening speed of the bypass valve.

In a preferred embodiment, the pressure surface on the closing side of the bypass valve spool is bigger than the (two) opening surface(s) on the other side of the bypass valve spool in order to ensure a quick closing of the bypass, as well as to ensure the closed position of the bypass valve. However, depending on system parameters an orifice for dampening the fluid flow through the control line can be placed therein which leads to lower frequency of opening and closing loops when it comes to a low loop event, and leads to a quick return to stable operation conditions, too. Hence, such an orifice in the control line would have a dampening effect on the switching of the bypass valve, especially when the closing pressure surface at one of the front faces of the bypass valve spool is configured to be bigger when compared to the (two) opening front face(s) located at the opposite side of the bypass valve spool. This condition specifically applies according to the invention to the embodiment where a switching valve is used in the hydraulic valve block.

As disclosed above, the hydraulic valve block according to the invention is especially useful for hydraulic units provided for closed circuit applications wherein the hydraulic valve block according to the invention can be used for hydraulic pumps or hydraulic motors. Likewise, such pumps and motors are of the axial or radial type of construction and they can be equipped with a means of varying the displacement volume. Here, at least a skilled person will associate this to axial hydraulic piston units of the swash plate, or the bent axis type of construction. However, radial piston pumps having or not a variable displacement volume control are also covered by the invention. Furthermore, even though only rotational hydraulic devices are forenamed the hydraulic valve block according to the invention is also applicable to hydraulic linear drives, for instance in two-way hydraulic cylinders.

The preferred embodiment shown in the enclosed figures is for explanation purposes only and should not limit the scope of the inventive idea nor the scope of protection. In the following Figures, it is shown:
- Figure 1:: A schematic diagram of a hydraulic valve block according to the invention in a non-pressurized state.
- Figure 2:: The embodiment of the hydraulic valve block according to the invention of Figure 1 in a normal operational state of a hydraulic unit.
- Figure 3:: A schematic diagram of the embodiment of the hydraulic valve block according to Figure 1 in an operational state when a low loop event occurs.

In the Figures, same parts are indicated by the same reference numbers for an easier legibility.

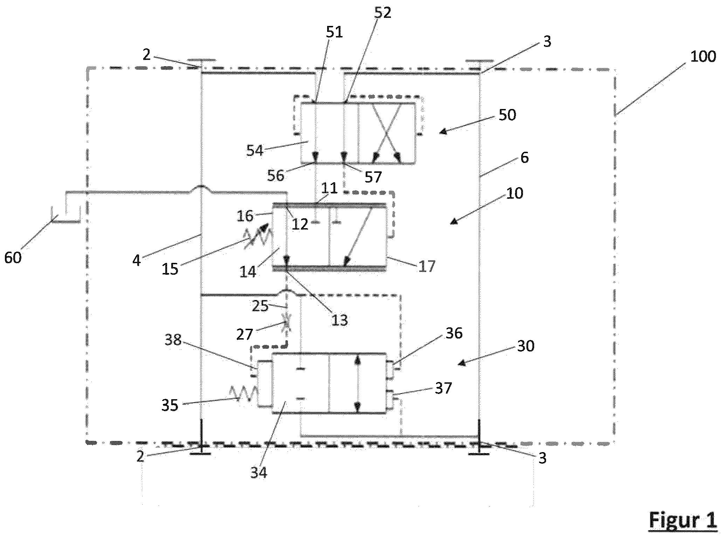

Figure 1 shows a hydraulic valve block 100 according to the invention in a non-pressurized state with non-connected pressure ports, for instance. Merely exemplarily, the hydraulic ports on the left in Figure 1 are indicated as high-pressure ports 2 and the pressure ports on the right side of Figure 1 are chosen to be the low-pressure ports 3. The two high-pressure ports 2 are connected by a high-pressure line 4 and the two low pressure ports 3 are connected by a low-pressure line 6. Between the two pressure lines 4 and 6, three valves are arranged, wherein the upper one is a switching valve 50, having a high-pressure inlet 51 and a low-pressure inlet 52. Each of the front faces of selectivity valve spool 54 is referenced to one of the pressure levels at inlet 51 or inlet 52 in order to move the switching valve spool 54, when the high-pressure port 2 is interchanged with the low pressure port 3. At least a person with skills in the relevant art derives from the switching valve 50 that when the pressure ports are changing pressure levels the switching valve 50 is switched into its second position (not shown), such that it is always ensured that pressure from the high pressure port 2 is guided to the high pressure outlet 56, and low pressure is guided from the inlet port 2 to the low pressure outlet port 57.

The two outlet ports 56 and 57 of the switching valve 50 are connected to a pilot valve 10 wherein the high pressure outlet 56 of switching valve 50 is connected to a pilot valve inlet 11, and the outlet port 57 of the switching valve 50 is connected with a second front face 17 of the pilot valve spool 14 of pilot valve 10. On the first front face 16 of the pilot valve 10, a pilot valve spring 15 is located. The pilot valve spring 15 holds the pilot valve 10 in its initial position, as depicted in Figure 1. Pilot valve 10 also has a discharge port 12 connected to an area of low pressure in this instance to a tank 60 or a discharge area. Pilot valve 10 further comprises an outlet 13 which is connected to a control line 25 conducting towards a bypass valve 30.

This control line 25 is connected to a closing surface 38 on one front side of a bypass valve spool 34 of a bypass valve 30, on which a bypass valve spring 35 is arranged too. On the opposite side of the bypass valve spool 34, two opening front faces 36 and 37 are provided wherein the first opening front face 36 is connected to the high pressure line 4, and the second opening front face 37 is connected to the low pressure line 6. As the hydraulic valve block 100 shown in Figure 1 is depicted in the non-pressurized state, the bypass valve spring 35 pushes the bypass valve 30 into the closed position, and so the bypass between the high pressure line 4 and the low pressure line 6 is disabled. At the same time, as no pressure is present neither in the low pressure line 6 nor in the high pressure line 4 the pilot valve spring 15 holds the pilot valve 10 in its initial position, a position in which the pilot valve spool 14 connects the control pressure line 25 with the discharge area 60 so that no pressure force can act on the closing front face 38 of the bypass valve spool 34.

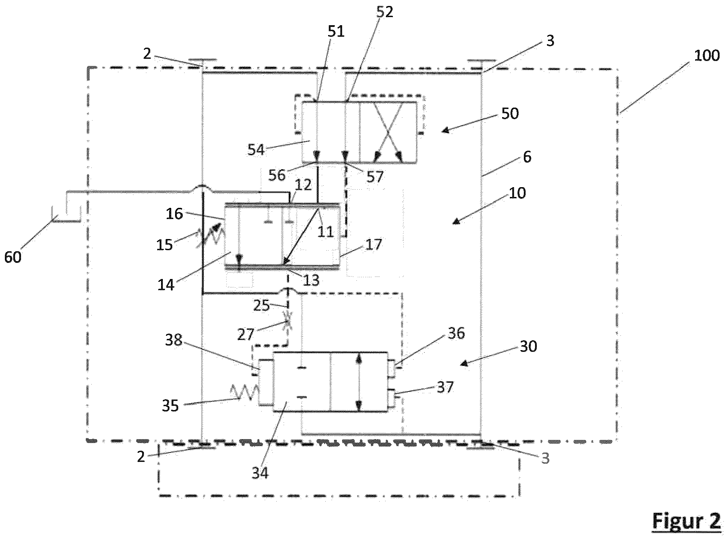

In Figure 2, the hydraulic valve block 100 according to the invention is depicted in an operational state in which the low-pressure level is higher than a minimum value and below which any low pressure compensation should start. This means that the low pressure, which is guided via the switching valve 50 on the second front face of pilot valve 10 creates a higher hydraulic force than the spring force exerting on the opposite first front facel6 does. Therefore, pilot valve spool 14 is displaced to its shifted position and the pilot valve guides hydraulic pressure from the high-pressure side, i.e. the high pressure port 2 into the control line 25. The pressure in control line 25 subsequently acts on the closing front face 38 of the bypass valve spool 34. On the same closing surface 38 the bypass valve spring 35 also exerts a closing force on the bypass valve spool 34. On the opposite side, high pressure from the high-pressure line 4 is acting upon the first opening front face 36 which is smaller than the closing front face 38, hence the bypass valve spool 34 is held in its closed position and the bypass valve 30 is closed, i.e. the bypass between the high pressure line 4 and the low pressure line 6 is disabled.

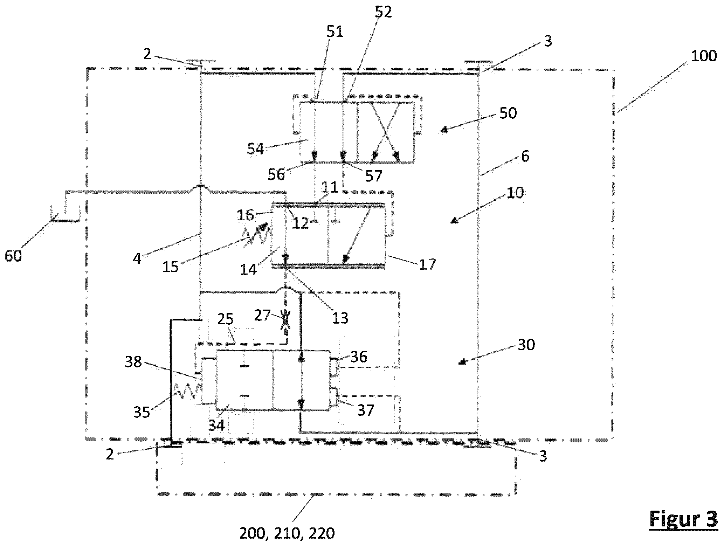

Figure 3 depicts another operational state of the hydraulic valve block 100 according to the invention. The pressure in the low-pressure line 6 is lower than a pre-determined threshold value, i.e. when a low loop event occurs. The switching valve 50 remains in the same position as depicted with Figures 1 and 2, however, pilot valve 10 is in the initial position again as the low pressure, which is guided onto the second front face 17 of the pilot valve spool 14 does not create a hydraulic force sufficiently high enough to overcome the spring force of the pilot valve spring 15. Hence, the control line 25 is discharged to the discharge area 60 such that the hydraulic force on the closing surface 38 of the bypass valve spool 34 is reduced to a minimum, and only bypass valve spring 35 exerts a closing force on bypass valve spool 34. As at the same time the first opening front face 36 of bypass valve spool 34 is still connected to the high pressure line 4 a higher opening force on bypass valve spool 34 is created, pushing the bypass valve spool 34 into its open position, wherein the hydraulic bypass from the high pressure line 4 to the low pressure line 6 is enabled.

The bypass valve spool 34 remains in this open position as long as the hydraulic force on the second front face 17 of the pilot valve spool 14 is not capable of overcoming the spring force of the pilot valve spring 15 in order to move the pilot valve spool 13 into the shifted or switched position respectively. When the hydraulic force on the second front face 17 of the pilot valve spool 14 is high enough to overcome the force of pilot valve spring 15 the pilot valve spool 14 is brought into the switched position, and hydraulic pressure from the high pressure port 2 is guided via the pilot valve 10 and the control line 25 onto the closing front face 38 of the bypass valve spool 34 ( which is the bigger pressure face) and therefore, bypass valve 30 is closed immediately after the low pressure level in low pressure line 6 is higher than the threshold value for the pre-determined/pre-adjusted minimum low pressure.

So, from the Figures it can be seen that by adjusting the spring force of the pilot valve spring 15 the threshold value for the minimum pressure level can be held to the pressure level of the low-pressure line 6. This pressure level can be set at any time, especially when the hydraulic system is coupled with a hydraulic valve block, according to the invention.

Also, a person skilled in the art can derive that it may be beneficial to configure and adjust the bypass valve spring 35 in order to adapt the bypass valve switching to other system parameters of any hydraulic system equipped with the hydraulic valve block 100, according to the invention.

Furthermore, person skilled in the relevant art will derive that the switching valve 50 can be omitted if the hydraulic valve block 100 and system is operated in only one direction, and without operational mode changing, in other words the high pressure line 4 is never interchanged with the low pressure line 6. A skilled person easily sees that the same working principle as described above is fulfilled by the pilot valve 10 and the bypass valve 30 when the operational mode of a hydraulic system is changed, for instance, from motoring mode to pumping mode (when the high pressure line 4 is interchanged with the low pressure line 6). In this case, the switching valve 50 is switched so that the pressure from the high pressure port 2 is guided to the inlet 11, and hydraulic pressure from the low pressure port 3 is guided onto the second front face 17 of pilot valve spool 14.

In summary, a hydraulic system equipped with the inventive hydraulic valve block offers the user a reliable, robust and cost-effective system which ensures that, when a minimum low pressure level in a hydraulic system is undercut, a bypass is opened in an optimum manner such that a low pressure compensation is enabled in order to avoid damage to the hydraulic system. In practice, this automatic regulation/controlling is done continuously as shock loads frequently occur to hydraulic systems. In order to avoid frequencies/pressure oscillations within the hydraulic system when shock loads occur, an orifice 27 can be implemented to control line 25 in order to dampen these pressure oscillations.

From above discussion and the accompanying Figures and claims it will be apparent that the hydraulic valve block 100 according to the invention offers many advantages over the prior art. It will be appreciated further by a person skilled in the art that other various modifications could be made to the device without parting from the scope of the claims.

### Reference number list

- 2: High pressure port
- 3: Low pressure port
- 4: High pressure line
- 6: Low pressure line

- 10: Pilot valve
- 11: Pilot valve inlet
- 12: Pilot valve discharge port
- 13: Pilot valve outlet
- 14: Pilot valve spool
- 15: Pilot valve spring
- 16: First front face
- 17: Second front face
- 18: Solenoid

- 25: Control line
- 27: Orifice

- 30: Bypass valve
- 34: Bypass valve spool
- 35: Bypass valve spring
- 36: First opening front face
- 37: Second opening front face
- 38: Closing front face

- 50: Switching valve
- 51: High pressure inlet
- 52: Low pressure inlet
- 54: Selectivity valve spool
- 56: High pressure outlet
- 57: Low pressure outlet

- 60: Discharge area/Tank

- 100: Hydraulic valve block
- 200: Hydraulic unit
- 210: Hydraulic motor
- 220: Hydraulic pump

## Claims

1. Hydraulic valve block (100) for a hydraulic unit provided to be used in a closed hydraulic circuit application, comprising a high pressure port (2), a low pressure port (3), a pilot valve (10) having a pilot valve spool (14), and a bypass valve (30) having a bypass valve spool (34), wherein
- the pilot valve (10) is connected with a pilot valve inlet (11) to the high pressure port (2), with a discharge port (12) to a discharge area (60) and with a control outlet (13) to a control line (25), the pilot valve spool (14) is held in an initial position in which the control line (25) is connected to the discharge area (60) by means of a pilot valve spring (15) acting on its first front face (16), wherein the pilot valve spool (14) can slide into a shifted position and pressure from the pilot valve inlet (11) can be conducted to the control line (25) by means of a force, whose strength of force depends on the pressure level at the low pressure port (3) acting on the second front face (17) of the pilot valve spool (14) against the force of the pilot valve spring (15);
- the bypass valve spool (34) comprises a first opening front face (36) connected to the high pressure port (2) and a closing front face (38) to which the control line (25) is connected to and on which a bypass valve spring (35) acts in closing direction,
wherein the bypass valve (30) can be switched from a closed position in which a fluid connection between the high pressure port (2) and low pressure port (3) is disabled, to an open position in which a fluid connection between the high pressure port (2) and the low pressure port (3) is enabled, if an opening force exerted by the high pressure on the first opening front face (36) of the bypass valve spool (34) is higher than the sum of closing forces on the closing front face (38) exerted by the pressure in the control line (25) and the force of the bypass valve spring (35).

2. Hydraulic valve block (100) according to claim 1, wherein the bypass spool (34) comprises a second opening front face (37) connected to the low-pressure port (3).

3. Hydraulic valve block (100) according to claim 2, wherein the first opening front face (36) and the second opening front face (37) on the bypass-spool (34) are of equal size.

4. Hydraulic valve block (100) according to one of claims 1 to 3, wherein the second front face (17) of the pilot valve spool (14) is fluidly connected to the low-pressure port (3).

5. Hydraulic valve block (100) according to one of claims 1 to 3, wherein the force on the second front face (17) of the pilot valve spool (14) is exerted by a solenoid (18).

6. Hydraulic valve block (100) according to one of the preceding claims, wherein the pilot valve (10) is a proportional valve.

7. Hydraulic valve block (100) according to one of the preceding claims, wherein the force of the pilot valve spring (15) and/or the force of the bypass valve spring (35) is/are adjustable.

8. Hydraulic valve block (100) according to one of the preceding claims, wherein an orifice (27) is located in the control line (25).

9. Hydraulic valve block (100) according to one of claims 2 to 8, wherein a two position switching valve (50) is fluidly connected to the high pressure port (2) and the low pressure port (3) to select and channel high pressure from the high pressure port (2) to the inlet (11) of the pilot valve (10), and low pressure from the low pressure port (3) onto the second front face (17) of the pilot valve spool (14).

10. Hydraulic unit (200) for closed circuit applications to which a hydraulic valve block (100) according to one of claims 1 to 9 is connected to at respective high pressure and low-pressure ports of the hydraulic unit (200).

11. Hydraulic system (300) comprising a hydraulic motor (210) and a hydraulic pump (220) connected via working lines to form part of a closed circuit, the system further comprising a hydraulic valve block (100) according to one of claims 1 to 9.

12. Hydraulic system (300) according to claim 11, wherein the hydraulic valve block (100) is attached to the hydraulic motor (210) or the hydraulic pump (220).

## Patentansprüche

1. Hydraulischer Ventilblock (100) für eine Hydraulikeinheit vorgesehen zur Verwendung in einer geschlossenen Hydraulikkreislauf-Anwendung, aufweisend einen Hochdruckanschluss (2), einen Niederdruckanschluss (3), ein Steuerventil (10) mit einem Steuerventilschieber (14) und ein Bypass-Ventil (30) mit einem Bypass-Ventilschieber (34), wobei
- das Steuerventil (10) mit einem Steuerventileinlass (11) mit dem Hochdruckanschluss (2), mit einem Auslassanschluss (12) mit einem Auslassbereich (60) und mit einem Steuerauslass (13) mit einer Steuerleitung (25) verbunden ist, wobei der Steuerventilschieber (14) in einer Anfangsstellung, in der die Steuerleitung (25) mit dem Auslassbereich (60) verbunden ist, mittels einer Steuerventilfeder (15) gehalten wird, die auf dessen erste Stirnfläche (16) wirkt, wobei mittels einer Kraft der Steuerventilschieber (14) in eine geschaltete Stellung gleiten und Druck vom Steuerventileinlass (11) zur Steuerleitung (25) leiten kann, deren Höhe vom Druckniveau am Niederdruckanschluss (3) abhängt, das auf die zweite Stirnfläche (17) des Steuerventilschiebers (14) gegen die Kraft der Steuerventilfeder (15) wirkt;
- der Bypass-Ventilschieber (34) eine erste, mit dem Hochdruckanschluss (2) verbundene, öffnende Stirnfläche (36) aufweist, und eine, mit der Steuerleitung (25) verbundene, schließende Stirnfläche (38), auf die eine Bypass-Ventilfeder (35) in schließender Richtung wirkt,
wobei das Bypass-Ventil (30) von einer geschlossenen Stellung, in der eine Fluidverbindung zwischen dem Hochdruckanschluss (2) und dem Niederdruckanschluss (3) gesperrt ist, in eine offene Stellung geschaltet werden kann, in der eine Fluidverbindung zwischen dem Hochdruckanschluss (2) und dem Niederdruckanschluss (3) ermöglicht ist, wenn eine öffnende Kraft, die vom Hochdruck auf die erste, öffnende Stirnfläche (36) des Bypass-Ventilschiebers (34) ausgeübt wird, größer ist als die Summe der schließenden Kräfte auf der schließenden Stirnfläche (38), die vom Druck in der Steuerleitung (25) und der Kraft der Bypass-Ventilfeder (35) ausgeübt werden.

2. Hydraulischer Ventilblock (100) nach Anspruch 1, wobei der Bypass-Schieber (34) eine zweite, öffnende Stirnfläche (37) aufweist, die mit dem Niederdruckanschluss (3) verbunden ist.

3. Hydraulischer Ventilblock (100) nach Anspruch 2, wobei die erste, öffnende Stirnfläche (36) und eine zweite, öffnende Stirnfläche (37) auf dem Bypass-Schieber (34) gleich groß sind.

4. Hydraulischer Ventilblock (100) nach einem der Ansprüche 1 bis 3, wobei die zweite Stirnfläche (17) des Steuerventilschiebers (14) fluidisch mit dem Niederdruckanschluss (3) verbunden ist.

5. Hydraulischer Ventilblock (100) nach einem der Ansprüche 1 bis 3, wobei die Kraft auf die zweite Stirnfläche (17) des Steuerventilschiebers (14) durch einen Elektromagneten (18) aufgebracht wird.

6. Hydraulischer Ventilblock (100) nach einem der vorhergehenden Ansprüche, wobei das Steuerventil (10) ein Proportionalventil ist.

7. Hydraulischer Ventilblock (100) nach einem der vorhergehenden Ansprüche, wobei die Kraft der Steuerventilfeder (15) und/oder die Kraft der Bypass-Ventilfeder (35) einstellbar ist/sind.

8. Hydraulischer Ventilblock (100) nach einem der vorhergehenden Ansprüche, wobei eine Blende (27) in der Steuerleitung (25) angeordnet ist.

9. Hydraulischer Ventilblock (100) nach einem der Ansprüche 2 bis 8, wobei ein Umschaltventil (50) mit zwei Stellungen fluidisch mit dem Hochdruckanschluss (2) und dem Niederdruckanschluss (3) verbunden ist, um Hochdruck vom Hochdruckanschluss (2) auszuwählen und zum Einlass (11) des Steuerventils (10) zu leiten und Niederdruck vom Niederdruckanschluss (3) zur zweiten Stirnfläche (17) des Steuerventilschiebers (14).

10. Hydraulikeinheit (200) für geschlossene Kreislauf-Anwendungen, an die ein hydraulischer Ventilblock (100) nach einem der Ansprüche 1 bis 9 an den jeweiligen Hochdruck- und Niederdruckanschlüssen der hydraulischen Einheit (200) angeschlossen ist.

11. Hydraulisches System (300) aufweisend einen hydraulischen Motor (210) und eine hydraulische Pumpe (220), die über Arbeitsleitungen verbunden sind, um einen Teil eines geschlossenen Kreislaufes auszubilden, wobei das System weiter einen hydraulischen Ventilblock (100) nach einem der Ansprüche 1 bis 9 aufweist.

12. Hydraulisches System (300) nach Anspruch 11, wobei der hydraulische Ventilblock (100) am hydraulischen Motor (210) oder der hydraulischen Pumpe (220) angebracht ist.

## Revendications

1. Bloc de vanne hydraulique (100) destiné à une unité hydraulique fournie pour être utilisée dans une application de circuit hydraulique fermé, comprenant un orifice haute pression (2), un orifice basse pression (3), une vanne pilote (10) ayant un tiroir de vanne pilote (14), et une vanne de by-pass (30) ayant un tiroir de vanne de by-pass (34), dans lequel
- la vanne pilote (10) est reliée à une entrée de vanne pilote (11) à l'orifice haute pression (2), avec un orifice d'évacuation (12) vers une zone d'évacuation (60) et avec une sortie de commande (13) vers une ligne de commande (25), le tiroir de vanne pilote (14) est maintenu dans une position initiale dans laquelle la ligne de commande (25) est reliée à la zone d'évacuation (60) au moyen d'un ressort de vanne pilote (15) agissant sur sa première face avant (16), le tiroir de vanne pilote (14) pouvant coulisser dans une position décalée et une pression provenant de l'entrée de vanne pilote (11) pouvant être conduite vers la ligne de commande (25) au moyen d'une force, la résistance de la force dépendant du niveau de pression au niveau de l'orifice basse pression (3) agissant sur la seconde face avant (17) du tiroir de vanne pilote (14) contre la force du ressort de vanne pilote (15) ;
- le tiroir de vanne de by-pass (34) comprend une première face avant d'ouverture (36) reliée à l'orifice haute pression (2) et une face avant de fermeture (38) à laquelle la ligne de commande (25) est reliée et sur laquelle un ressort de vanne de by-pass (35) agit dans une direction de fermeture,
la vanne de by-pass (30) pouvant être commutée d'une position fermée dans laquelle une liaison fluidique entre l'orifice haute pression (2) et l'orifice basse pression (3) est désactivée, à une position ouverte dans laquelle une liaison fluidique entre l'orifice haute pression (2) et l'orifice basse pression (3) est activée, si une force d'ouverture exercée par la haute pression sur la première face avant d'ouverture (36) du tiroir de vanne de by-pass (34) est supérieure à la somme des forces de fermeture sur la face avant de fermeture (38) exercées par la pression dans la ligne de commande (25) et la force du ressort de vanne de by-pass (35).

2. Bloc de vanne hydraulique (100) selon la revendication 1, dans lequel le tiroir de by-pass (34) comprend une seconde face avant d'ouverture (37) reliée à l'orifice basse pression (3).

3. Bloc de vanne hydraulique (100) selon la revendication 2, dans lequel la première face avant d'ouverture (36) et la seconde face avant d'ouverture (37) sur le tiroir de by-pass (34) sont de taille égale.

4. Bloc de vanne hydraulique (100) selon l'une des revendications 1 à 3, dans lequel la seconde face avant (17) du tiroir de vanne pilote (14) est en liaison fluidique avec l'orifice basse pression (3).

5. Bloc de vanne hydraulique (100) selon l'une des revendications 1 à 3, dans lequel la force sur la seconde face avant (17) du tiroir de vanne pilote (14) est exercée par un solénoïde (18).

6. Bloc de vanne hydraulique (100) selon l'une des revendications précédentes, dans lequel la vanne pilote (10) est une vanne proportionnelle.

7. Bloc de vanne hydraulique (100) selon l'une des revendications précédentes, dans lequel la force du ressort de vanne pilote (15) et/ou la force du ressort de vanne de by-pass (35) est/sont ajustable(s).

8. Bloc de vanne hydraulique (100) selon l'une des revendications précédentes, dans lequel un orifice (27) est situé dans la ligne de commande (25).

9. Bloc de vanne hydraulique (100) selon l'une des revendications 2 à 8, dans lequel une vanne de commutation à deux positions (50) est mise en communication fluidique avec l'orifice haute pression (2) et l'orifice basse pression (3) pour sélectionner et canaliser la haute pression provenant de l'orifice haute pression (2) vers l'entrée (11) de la vanne pilote (10) et la basse pression provenant de l'orifice basse pression (3) sur la seconde face avant (17) du tiroir de vanne pilote (14).

10. Unité hydraulique (200) pour applications en circuit fermé à laquelle un bloc de vanne hydraulique (100) selon l'une des revendications 1 à 9 est relié au niveau d'orifices haute pression et basse pression respectifs de l'unité hydraulique (200).

11. Système hydraulique (300) comprenant un moteur hydraulique (210) et une pompe hydraulique (220) reliés par l'intermédiaire de lignes de travail pour faire partie d'un circuit fermé, le système comprenant en outre un bloc de vanne hydraulique (100) selon l'une des revendications 1 à 9.

12. Système hydraulique (300) selon la revendication 11, dans lequel le bloc de vanne hydraulique (100) est relié au moteur hydraulique (210) ou à la pompe hydraulique (220).
